# EUROPÄISCHE PATENTSCHRIFT

(11) **EP 1 530 184 B1**
(45) Veröffentlichungstag und Bekanntmachung des Hinweises auf die Patenterteilung: **31.01.2007**
(21) Anmeldenummer: 04024712.4
(22) Anmeldetag: 16.10.2004
(51) Int. Cl.: G08G 1/16

(54) **Kraftfahrzeug**
Vehicle
Véhicule

(30) Priorität: 07.11.2003 DE 10351985
(43) Veröffentlichungstag der Anmeldung: 11.05.2005
(73) Patentinhaber: AUDI AG, 85045 Ingolstadt (DE)
(72) Erfinder: Popken, Markus, 85139 Wettstetten (DE); Hilpoltsteiner, Christian, 85309 Pörnbach (DE); Buschardt, Boris, Dr., 85049 Ingolstadt (DE); Hamberger, Werner, Dr., 85101 Lenting (DE)
(74) Vertreter: Thielmann, Frank

(56) Entgegenhaltungen:
- EP-A- 1 037 189
- DE-A1- 10 160 648
- DE-A1- 19 736 964
- DE-A1- 19 835 601
- DE-C1- 4 313 568

## Beschreibung

Die Erfindung betrifft ein Kraftfahrzeug mit wenigstens einem der Querführung des Kraftfahrzeugs dienenden Fahrerassistenzsystem, das über wenigstens ein Bedienelement bedienbar ist.

Die DE 4 313 568 offenbart ein Kraftfahrzeug gemäß dem Oberbegriff des Anspruchs 1.

Zur Erhöhung der Fahrsicherheit ist der Einsatz sogenannter Fahrerassistenzsysteme in modernen Kraftfahrzeugen bekannt. Als solche Fahrerassistenzsysteme sind zum Beispiel Spurhalte- oder Spurführungsassistenzsysteme zu nennen, die durch Überwachung des Fahrzeugvorfeldes dazu dienen, ein Fahrzeug auf einer bestimmten Fahrspur, die beispielsweise durch links- und rechtsseitige Begrenzungsmarkierungen definiert ist, zu halten und im Falle etwaiger Abweichungen oder ähnlichem korrigierend einzugreifen oder dem Fahrer entsprechende Warnsignale zu geben. Weiter sind als Fahrerassistenzsysteme sogenannte Spurwechselassistenzsysteme zu nennen, die den rückwärtigen Fahrzeugbereich wie auch den seitlichen Fahrzeugbereich überwachen und etwaige ein Einfädeln ermöglichende Lücken im benachbarten Fahrzeugstrom erfassen, die etwaige Beschleunigungswerte errechnen, um gefahrlos in eine erfasste Lücke einzuscheren, oder die Warnsignale auszugeben, wenn ein gefahrloses Einscheren eben nicht möglich ist. Auch sogenannte Totwinkelüberwachungssysteme sind als Fahrerassistenzsysteme anzusprechen. Mit diesen Systemen wird der optische Totwinkel, der sich beim Blick in den fahrerseitigen Rückspiegel ergibt, überwacht. Sollte sich in diesem Bereich ein Kraftfahrzeug befinden, das der Fahrer beim Blick in den Rückspiegel nicht sehen kann, wird dieses Fahrzeug über das Totwinkelüberwachungssystem erfasst und der Fahrer kann dann, wenn er einen Spurwechsel beabsichtigt, der gegebenenfalls zu einer Kollision führen würde, entsprechend gewarnt werden und reagieren. Mitunter sind mehrere derartige Fahrerassistenzsysteme vorgesehen, um einen maximalen Sicherheitsstandard zu erzielen.

In der Regel ist jedes Assistenzsystem über wenigstens ein eigenes Bedienelement bedienbar, vornehmlich ein- und ausschaltbar und gegebenenfalls auch sofern erforderlich parametrierbar. Mitunter sind mehrere separate Bedienelemente zur Bedienung eines Fahrerassistenzsystems vorgesehen. Diese befinden sich zumeist im Bereich der Mittelkonsole am Armaturenbrett. Dies ist insoweit nachteilig, als der Fahrer genötigt ist, seinen Blick von der Fahrbahn weg zum Armaturenbrett zu richten, wenn er das eine oder andere Bedienelement betätigen möchte, um dieses zu suchen. Auch ist er genötigt, eine Hand vom Lenkrad zu nehmen, um das oder die erforderlichen Bedienelemente manuell zu betätigen. Hieraus resultiert wiederum ein Gefahrenpotential, da der Fahrer in diesem Zeitraum abgelenkt ist und sich nicht mehr auf den Verkehr konzentriert und im Übrigen nur noch mit einer Hand das Lenkrad führt.

Der Erfindung liegt damit das Problem zugrunde, ein Kraftfahrzeug anzugeben, wobei eine begueme und sichere Bedienung des der Querführung dienenden Fahrerassistenzsystems bei Platz Sparender Plazierung gewährleistet wird.

Zur Lösung dieses Problems ist bei einem Kraftfahrzeug der eingangs genannten Art mit wenigstens einem der Querführung, also der Führung senkrecht zur Fahrzeuglängsachse dienenden Fahrerassistenzsystem erfindungsgemäß vorgesehen, dass das Bedienelement separat ausgeführt und an einem manuell zu betätigenden, lenkradnahen Hebel oder am Lenkrad selbst angeordnet ist wobei das Bedienelement an einem der Betätigung eines der Längsführung des Kraftfahrzeugs dienenden Assistenzsystems dienenden Hebel angeordnet oder einem lenkradseitig angeordneten Bedienelement zugeordnet ist.

Durch die Integration des Bedienelements an einem lenkradnahen Hebel oder am Lenkrad selbst kann der Fahrer das Bedienelement vorteilhaft in einer Weise bedienen, wie er es von der Bedienung anderer fahrzeugseitiger Einrichtungen, die über entsprechende lenkradnahe Hebel oder Lenkradtasten etc. zu bedienen sind (z.B. Blinker, Scheinwerfer, Scheibenwischer, Audiooder Telefonanlage etc.) kennt. Zur Bedienung des Fahrerassistenzsystems wird also in ein bekanntes Bedienschema integriert. Der Fahrer ist nicht mehr genötigt, seinen Blick vom Verkehr abzuwenden, da er nicht mehr erst umständlich suchen muss, wo sich das jeweils zu betätigende Bedienelement befindet. Vielmehr befindet sich dieses im Griffbereich der am Lenkrad befindlichen Hände und ist somit ohne weiteres zugänglich. Nachdem der Fahrer letztlich weiß, wo das Bedienelement angeordnet ist, ist es ihm möglich, quasi blind nach ihm zu greifen. Er kann somit vorteilhaft seinen Blick nach wie vor auf den Verkehr gerichtet lassen und wird nicht abgelenkt. Im Übrigen ist es auch nicht erforderlich, eine Hand vollständig vom Lenkrad zu nehmen, um das Bedienelement zu betätigen. Vielmehr kann das Lenkrad nach wie vor mit beiden Händen geführt werden, während das der Bedienung des Fahrerassistenzsystems dienende Bedienelement betätigt wird. Sollte je nach Ausgestaltung des Bedienelements gleichwohl ein kurzes Lösen der Hand vom Lenkrad erforderlich sein, so ist dies jedoch von sehr kurzer Dauer, nachdem sich das Bedienelement wie erfindungsgemäß vorgesehen in unmittelbarer Lenkradnähe befindet.

Insgesamt lässt die vorgesehene Positionierung des Bedienelements das einfache und gefahrlose Bedienen des Bedienelements unter Vermeidung der eingangs beschriebenen Schwierigkeiten zu.

Das Fahrerassistenzsystem, das über das so positionierte Bedienelement betätigbar ist, kann ein die Spureinhaltung oder den Spurwechsel assistierendes System sein, wie bereits einleitend beschrieben wurde.

Wenngleich die Möglichkeit besteht, für das oder die Fahrerassistenzsysteme, die über das oder die lenkradnahen oder lenkradseitigen Bedienelemente bedienbar sind, einen separaten Bedienhebel vorzusehen, sieht eine zweckmäßige Erfindungsausgestaltung die Integration des Bedienelements an einem der Bedienung einer fahrzeugseitigen Einrichtung dienenden Hebel, also an einem bereits ohnehin vorgesehenen Hebel vor. Zweckmäßigerweise handelt es sich hierbei um den Blinkhebel. Nachdem das oder die erfindungsgemäßen Fahrerassistenzsysteme der Querführung des Fahrzeugs dienen und der Blinkhebel ein Betätigungsteil ist, das ebenfalls dann zu betätigen ist, wenn eine Querführung, also ein Spurwechsel oder ein Abbiegen oder dergleichen gewünscht wird, stellt die Anordnung des Bedienelements am Blinkhebel eine ergonomisch äußerst günstige Lösung dar, nachdem der Kraftfahrer mit diesem Blinkhebel von Haus aus eine Querführung des Fahrzeugs verbindet.

Die Positionierung an einem der Betätigung eines der Längsführung des Kraftfahrzeug dienenden Bedienhebel oder einem solchen lenkradseitig angeordneten Bedienelement ist insofern zweckmäßig, als der Fahrer dann über einen einzigen Bedienhebel sämtliche der Fahrzeugführung dienenden Assistenzsysteme betätigen kann, er sich also de facto nur eine Stelle merken muss, wo er die erforderlichen Bedienelemente findet. Dies kann sowohl im Falle der Anordnung an einem Bedienhebel wie auch der unmittelbaren lenkradseitigen Anordnung zweckmäßig sein. Denkbar ist beispielsweise, das Bedienelement an einem der Bedienung eines adaptiven Geschwindigkeitsregelsystem dienenden Bedienhebel anzuordnen oder einem der Bedienung eines solchen Systems dienenden Bedienelement am Lenkrad zuzuordnen. Bei einem solchen adaptiven Geschwindigkeitsregelsystem, oft auch "ACC-System" genannt (ACC = Adaptive Cruise Control), handelt es sich um ein Regelsystem, bei dem unter Messung des Abstands zum vorausfahrenden Kraftfahrzeug die Geschwindigkeit automatisch zur Beibehaltung eines definierten Abstands zum vorausfahrenden Fahrzeug eingestellt wird.

Wie bereits beschrieben ist es zweckmäßig, wenn die Bedienelemente zweier unterschiedlicher, der Querführung dienender Fahrerassistenzsysteme an einem gemeinsamen Bedienhebel oder lokal benachbart am Lenkrad angeordnet sind. Der Fahrer findet damit die erforderlichen Bedienelemente für die in Rede stehenden Fahrerassistenzsysteme "an einem Ort", er muss sich also nicht unterschiedliche Orte merken.

Über das Bedienelement kann der Betrieb des oder eines Fahrersystems einund ausschaltbar und/oder parametrierbar sein, je nach Auslegung des jeweiligen Assistenzsystems. Das hebelseitig vorgesehene Bedienelement kann als Drehschalter, der um die Hebellängsachse zu drehen ist, als Schieber, der entlang des Hebels zu schieben ist oder als Taste beispielsweise am Hebelende ausgebildet sein, während das lenkradseitige Bedienelement als Schieber, Taste oder Walze oder Rad ausgebildet sein kann.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Teilansicht eines Kraftfahrzeugs mit Blick auf das Lenkrad,
- Fig. 2: das Lenkrad mit einer Anordnung der Bedienelemente nach einer zweiten Ausführungsform,
- Fig. 3: das Lenkrad mit einer Anordnung der Bedienelemente nach einer dritten Ausführungsform, und
- Fig. 4: das Lenkrad mit einer Anordnung der Bedienelemente nach einer vierten Ausführungsform.

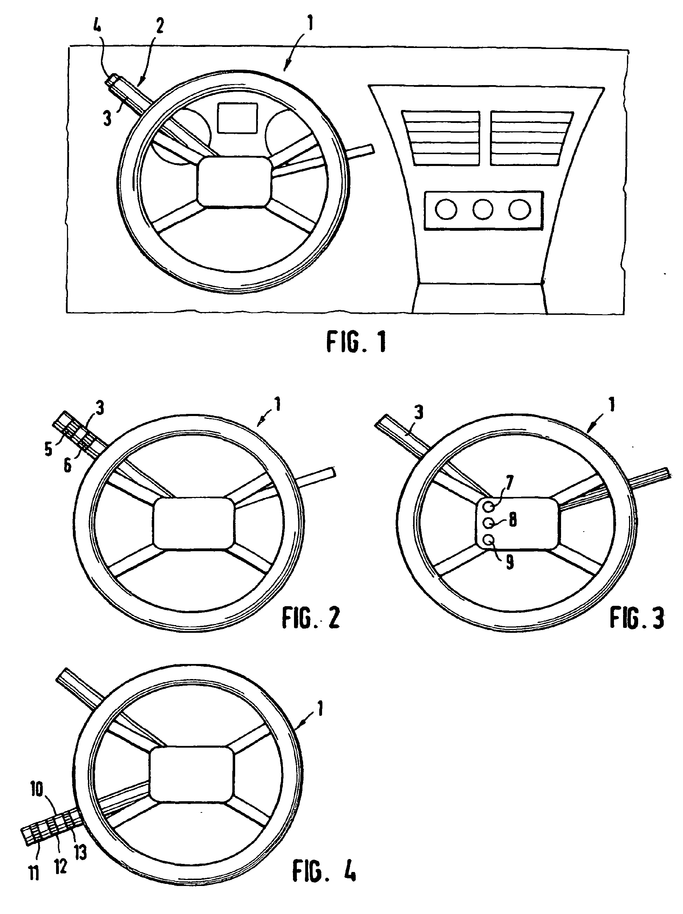

Fig. 1 zeigt einen Ausschnitt eines Kraftfahrzeugs mit Blick auf das Lenkrad 1. Lenkradnah ist ein Bedienhebel 2 in Form eines Blinkhebels 3 vorgesehen, der zum Betätigen der linken und rechten Fahrzeugblinker dient, was bekanntlich durch Heben oder Drücken des Hebels nach oben oder unten erfolgt.

An diesem Blinkhebel 3 ist ein Bedienelement 4 in Form einer hebelendseitig angeordneten Drucktaste vorgesehen. Über diese Drucktaste kann ein Fahrerassistenzsystem beispielsweise ein- oder ausgeschaltet werden. Als solches Fahrerassistenzsystem ist beispielsweise ein Spurhalte- oder Spurführungssystem zu nennen, das häufig auch "LDW-System" (LDW = Lane Departure Warning) genannt wird. Als solche Systeme sind auch Spurhaltesysteme zu nennen, bei denen durch aktives Eingreifen in den Fahrbetrieb die Spurhaltung unterstützt wird. Über dieses System werden unter Verwendung geeigneter Sensoren das Fahrzeugvorfeld und gegebenenfalls der Fahrzeugseitenbereich erfasst und überwacht. Über eine geeignete Verarbeitungseinrichtung wird ermittelt, ob das Fahrzeug die Fahrspur, auf der es sich befindet und die in der Regel über links- und rechtsseitige Spurbegrenzung definiert ist, einhält oder nicht. Bei einer Abweichung wird beispielsweise ein Warnsignal etc. gegeben. Alternativ ist es auch denkbar, dass es sich bei dem über das Bedienelement 4 beispielsweise ein- und ausschaltbaren Fahrerassistenzsystem um ein aktives oder passives Spurwechselassistenzsystem (SWA-System) handelt, über welches der seitliche Verkehrsfluss überwacht wird und überprüft wird, ob ein gefahrloses Ausscheren und Einfädeln in eine im seitlichen Verkehrsfluss befindliche Lücke möglich ist. Denkbar ist es ferner, auch kombinierte Systeme zu verwenden.

Aufgrund der Integration des Bedienelements 4 in den Blinkhebel, der ohnehin für einen Spurwechsel, also für eine vom Fahrer beabsichtigte Querführung des Fahrzeugs zu betätigen ist, ist die Positionierung zum einen sehr sinnfällig und für den Fahrer einfach zu merken. Zum anderen lässt die lenkradnahe Positionierung eine einfache Betätigung zu, ohne dass die Hand vollständig vom Lenkrad genommen werden muss.

Fig. 2 zeigt eine weitere Ausführungsform des Lenkrads 1. Hier sind am Blinkhebel 3 zwei Bedienelemente 5, 6 in Form von Drehschaltern vorgesehen, die um die Hebellängsachse zu drehen sind. Das Bedienelement 5 dient beispielsweise zum Ein- und Ausschalten des Spurhalte- oder Spurführungssystems (LDW-System), während das Bedienelement 6 zum Einund Ausschalten des Spurwechselassistenzsystems (SWA-System) dient. Beide sind an einem gemeinsamen Hebel, nämlich dem Blinkhebel, angeordnet. Der Fahrer muss also lediglich eine Position verinnerlicht haben, wo er die der Querführung dienenden Bedienelemente findet, die er wie ausgeführt sehr einfach erreicht. Er ist nicht genötigt, sich vom Verkehr abzuwenden, wenn er die Bedienelemente betätigen möchte.

Fig. 3 zeigt ein Lenkrad 1 mit einer weiteren erfindungsgemäßen Bedienelementanordnung. Gezeigt sind unmittelbar am Lenkrad angeordnete Bedienelemente 7, 8, 9, die als einfache Drucktasten ausgebildet sind. Das Bedienelement 7 dient beispielsweise zum Betätigen des Spurhalte- bzw. Spurführungssystems (LDW-System), das Bedienelement 8 dient beispielsweise zur Bedienung des Spurwechselassistenzsystems (SWA-System), während das Bedienelement 9 beispielsweise zur Bedienung des Geschwindigkeitsregelsystems bzw. Abstandshaltesystems (ACC-System) dient. Auch diese Bedienelemente sind zum einen auf einfache Weise zugänglich, zum anderen sind sie im Wesentlichen an einem gemeinsamen Ort angeordnet, was für den Fahrer vorteilhaft ist. Die linksseitige Anordnung am Lenkrad korrespondiert mit dem ebenfalls links angeordneten Blinkhebel 3, das heißt, auch insoweit ergeben sich ergonomisch günstige Eigenschaften.

Schließlich zeigt Fig. 4 ein Lenkrad 1 mit einer weiteren Bedienelementanordnung. Hier ist ein separater Bedienhebel 10 vorgesehen, an dem drei Bedienelemente 11, 12, 13 vorgesehen sind, die hier als um die Hebellängsachse zu drehende Drehschalter ausgebildet sind und beispielsweise zur Betätigung der Systeme dienen, die über die Bedienelemente 7, 8, 9 in Fig. 3 betätigt werden können. Auch hier sind sämtliche der Querführung dienenden Bedienelemente 11, 12 wie auch das der Längsführung dienenden Bedienelement 13 an einem gemeinsamen Ort und an einem gemeinsamen Hebel angeordnet. Dieser Hebel kann beispielsweise eine Geschwindigkeitsregelanlage in Form eines Tempomaten dienen etc.

## Patentansprüche

1. Kraftfahrzeug mit wenigstens einem der Querführung des Kraftfahrzeugs dienenden Fahrerassistenzsystem, das über wenigstens ein Bedienelement bedienbar ist,
**dadurch gekennzeichnet,**
**dass** das Bedienelement (11,12) als separates Bedienelement (7, 8, 11, 12) an einem manuell zu betätigenden, lenkradnahen Hebel (2, 3, 10) oder am Lenkrad (1) selbst angeordnet ist, wobei das Bedienelement (11, 12) an einem der Betätigung eines der Längsführung des Kraftfahrzeugs dienenden Assistenzsystems dienenden Bedienhebel (10) angeordnet oder einem solchen lenkradseitig angeordneten Bedienelement (7, 8) zugeordnet ist.

2. Kraftfahrzeug nach Anspruch 1,
**dadurch gekennzeichnet,**
**dass** das Fahrerassistenzsystem ein die Spureinhaltung oder den Spurwechsel assistierendes System ist.

3. Kraftfahrzeug nach Anspruch 1 oder 2,
**dadurch gekennzeichnet, dass** das Bedienelement an einem der Bedienung eines adaptiven Geschwindigkeitsregelsystem dienenden Bedienhebel (10) angeordnet oder einem der Bedienung eines solchen Systems dienenden lenkradseitigen Bedienelement zugeordnet ist.

4. Kraftfahrzeug nach einem der vorangehenden Ansprüche,
**dadurch gekennzeichnet,**
**dass** die Bedienelemente (5, 6, 7, 8, 11, 12) zweier unterschiedlicher, der Querführung dienender Fahrerassistenzsysteme an einem gemeinsamen Bedienhebel (2, 3, 10) oder lokal benachbart am Lenkrad (1) angeordnet sind.

5. Kraftfahrzeug nach einem der vorangehenden Ansprüche,
**dadurch gekennzeichnet,**
**dass** über das Bedienelement (4, 5, 6, 7, 11, 12) der Betrieb des oder eines Fahrerassistenzsystems ein- und ausschaltbar und/oder parametrierbar ist.

6. Kraftfahrzeug nach einem der vorangehenden Ansprüche,
**dadurch gekennzeichnet,**
**dass das hebelseitig vorgesehene Bedienelement (4, 5, 6, 11, 12) als** Drehschalter, Schieber oder Taste und das lenkradseitige Bedienelement (7, 8) als Schieber oder Taste ausgebildet ist.

## Claims

1. Motor vehicle comprising at least one driver assistance system serving for transverse guidance of the motor vehicle which can be operated by means of at least one operating element, **characterised in that** the operating element (11, 12) is arranged as a separate operating element (7, 8, 11, 12) on a manually actuated lever (2, 3, 10) close to the steering wheel or on the steering wheel (1) itself, the operating element (11, 12) being arranged on an operating lever (10) serving to actuate an assistance system serving for longitudinal guidance of the motor vehicle or being associated with an operating element (7, 8) of this kind arranged on the steering wheel side.

2. Motor vehicle according to claim 1, **characterised in that** the driver assistance system is a lane tracking or lane change assistance system.

3. Motor vehicle according to claim 1 or claim 2, **characterised in that** it is arranged on an operating lever (10) serving to operate an adaptive cruise control system or is associated with an operating element on the steering wheel side serving to operate a system of this kind.

4. Motor vehicle according to one of the preceding claims, **characterised in that** the operating elements (5, 6, 7, 8, 11, 12) of two different driver assistance systems serving for transverse guidance are arranged on one common operating lever (2, 3, 10) or in a locally adjacent manner on the steering wheel (1).

5. Motor vehicle according to one of the preceding claims, **characterised in that** the operation of the or a driver assistance system can be switched on and off and/or programmed by means of the operating element (4, 5, 6, 7, 11, 12).

6. Motor vehicle according to one of the preceding claims, **characterised in that** the operating element (4, 5, 6, 11, 12) provided on the lever side is designed as a rotary switch, slide or push-button and the operating element (7, 8) provided on the steering wheel side is designed as a slide or push-button.

## Revendications

1. Véhicule automobile avec au moins un système d'assistance au conducteur servant au guidage transversal du véhicule automobile, qui peut être actionné par au moins un élément d'actionnement,
**caractérisé en ce que**
l'élément d'actionnement (11, 12) est disposé comme un élément d'actionnement séparé (7, 8, 11, 12) sur un levier (2, 3, 10) proche du volant, pouvant être actionné manuellement ou sur le volant (1) lui-même, l'élément d'actionnement (11, 12) étant disposé sur un levier d'actionnement (10) servant à actionner un système d'assistance servant au guidage longitudinal du véhicule automobile ou étant associé à un tel élément d'actionnement (7, 8) disposé côté volant.

2. Véhicule automobile selon la revendication 1,
**caractérisé en ce que**
le système d'assistance au conducteur est un système assistant le maintien de la voie ou le changement de voie.

3. Véhicule automobile selon la revendication 1 ou 2,
**caractérisé en ce**
**qu'**il est disposé sur un levier d'actionnement (10) servant à actionner un système de régulation de vitesse adaptatif ou est associé à un élément d'actionnement côté volant servant à actionner un tel système.

4. Véhicule automobile selon l'une quelconque des revendications précédentes,
**caractérisé en ce que**
les éléments d'actionnement (5, 6, 7, 8, 11, 12) de deux systèmes d'assistance au conducteur différents servant à la conduite transversale sont disposés sur un levier d'actionnement (2, 3, 10) commun ou localement de manière proche du volant (1).

5. Véhicule automobile selon l'une quelconque des revendications précédentes,
**caractérisé en ce que**
le fonctionnement du ou d'un système d'assistance au conducteur peut être allumé et éteint et/ou paramétré par l'intermédiaire de l'élément d'actionnement (4, 5, 6, 7, 11, 12).

6. Véhicule automobile selon l'une quelconque des revendications précédentes, **caractérisé en ce que**
l'élément d'actionnement (4, 5, 6, 11, 12) prévu côté levier est conçu comme un commutateur rotatif, un coulisseau ou un bouton et l'élément d'actionnement côté volant (7, 8) est conçu comme un coulisseau ou un bouton.
